# EUROPÄISCHE PATENTANMELDUNG

(11) **EP 2 050 331 A1**
(43) Veröffentlichungstag der Anmeldung: **22.04.2009**
(21) Anmeldenummer: 08018122.5
(22) Anmeldetag: 16.10.2008
(51) Int. Cl.: A01G 9/02, E01F 8/02, E02B 3/12

(54) **Bepflanzte Gabione**

(30) Priorität: 17.10.2007 DE 102007050027
(71) Anmelder: Helix Pflanzen GmbH, 70806 Kornwestheim (DE)
(72) Erfinder: Müller, Hans, 70806 Kornwestheim (DE)
(74) Vertreter: Maser, Jochen

(57) **Zusammenfassung**

Die Erfindung betrifft eine Gabione (11) bestehend aus einem gitter- oder drahtförmigen Käfig (12) und aus einem in dem Käfig (12) aufgenommenen Füllmaterial (14), wobei an zumindest einer Innenseite eines Wandabschnittes (17) des Käfigs (12) zumindest ein Vegetationselement (18) vorgesehen ist, welches zumindest teilweise aus dem Vegetationselement (18) herausragendes Pflanzenmaterial (23) umfasst und das in dem Vegetationselement (18) versehene Pflanzenmaterial (23) zur sichtbaren Außenseite eines Wandabschnittes des Käfigs (12) weist.

## Beschreibung

Die Erfindung betrifft eine Gabione, welche aus einem gitter- oder drahtförmigen Käfig und aus einem in dem Käfig aufgenommenen Füllmaterial besteht.

Gabionen, welche auch als Steinkäfig, Mauersteinkäfig oder Drahtschotterkasten bezeichnet werden, finden in der Außenanlagenplanung von Landschaften sowie im Straßen- und Wegebau zum Aufbau von Wällen, zur Errichtung von Lärmschutzwänden, für Stützwände und zur Errichtung von Sichtschutzwänden als auch zum Abstützen von Hängen Einsatz. Diese Gabionen bestehen aus einem gitterförmigen Käfig oder Drahtkäfig, der mit einem Füllmaterial, insbesondere mit Steinen, gefüllt ist. Durch die Auswahl von unterschiedlichem Füllmaterial kann die Optik der Gabionen an besondere Ansprüche angepasst werden.

Es besteht jedoch mehr und mehr der Bedarf, Sichtschutzmauern, Stützwände, Lärmschutzanlagen oder dergleichen aus Gabionen zu begrünen. Hierzu ist bereits vorgesehen, in einem Käfig für eine Lärmschutzwand eine Lärmschutzmatte aus Kokosfasern einzusetzen, die mit einem Polypropylennetz auf der Außenseite und einem synthetischen Vlies auf der Innenseite versteppt sind. Diese Lärmschutzmatten werden in den Käfig eingelegt. Anschließend wird der Käfig mit Füllmaterial befüllt. Als letzter Arbeitsschritt erfolgt eine Bepflanzung der Lärmschutzmatte durch Rankgewächse.

Diese Anordnung weist den Nachteil auf, dass eine nachträgliche Bepflanzung der eingelegten Lärmschutzmatte sehr schwierig beziehungsweise aufwändig ist, da aufgrund der bereits eingebrachten Schüttung oder des eingebrachten Füllmaterials ein hoher Druck auf die Lärmschutzmatten wirkt. Darüber hinaus ist zumeist eine gleichmäßige sowie vollständige Begrünung nicht oder nur nach einer erheblich langen Zeitdauer nur teilweise gegeben, so dass zumeist eine optisch nicht ansprechende Lärmschutzwand vorliegt.

Deshalb liegt der Erfindung die Aufgabe zugrunde, eine Gabione vorzuschlagen, welche nach dem Füllen des Käfigs mit Füllmaterial zumindest teilweise eine bepflanzte Wandseite aufweist und flexibel für verschiedene Außenanlagen einsetzbar ist.

Diese Aufgabe wird erfindungsgemäß durch die Merkmale des Anspruchs 1 gelöst. Weitere vorteilhafte Ausgestaltungen und Weiterbildungen sind in den weiteren Ansprüchen angegeben.

Durch die Ausgestaltung einer bepflanzten oder begrünten Gabione mit zumindest einem Pflanzenmaterial umfassenden Vegetationselement, welches an einer Innenseite eines Wandabschnittes des Käfigs angeordnet und somit zwischen dem Käfig und dem Füllmaterial in der Gabione vor dem Befüllen der Gabione mit Füllmaterial positioniert ist, wird ermöglicht, dass das zumindest teilweise aus dem Vegetationselement herausragende Pflanzenmaterial durch den gitterförmigen Käfig hindurch zur Außenseite der Gabione gelangt und somit unmittelbar nach Einbringen des Vegetationselementes in den Käfig eine begrünte Gabione gebildet ist. Durch die Einbringung des zumindest einen Vegetationselementes mit darin eingebrachtem oder darin aufgezogenem Pflanzenmaterial wird eine einfache Herstellung der begrünten Gabione ermöglicht und ein nachträgliches und teils schwieriges Bepflanzen verhindert. Darüber hinaus ist durch das in dem Vegetationselement angeordnete Pflanzenmaterial oder dem darin bereits aufgewachsenen Pflanzenmaterial der Vorteil gegeben, dass das darin angeordnete Pflanzenmaterial auch eine längere Trockenperiode ohne Austrocknen übersteht. Durch das Vegetationselement ist ermöglicht, dass Feuchtigkeit gespeichert werden kann. Solche begrünte Gabione können als bereits werksgefüllte Gabionen ausgebildet sein, das heißt, dass im Herstellungsbetrieb beispielsweise Gabionenelemente mit vorgegebenen Standardgrößen mit zumindest einem Vegetationselement und Füllmaterial versehen werden, um somit vor Ort nur aufgestellt zu werden. Alternativ kann die Herstellung der bepflanzten Gabione auch vor Ort erfolgen. In Abhängigkeit der Einsatzfälle können ein oder mehrere Wandabschnitte der Gabionen teils oder vollständig mit zumindest einem Vegetationselement versehen werden, um eine begrünte Außenseite zu bilden.

Nach einer weiteren bevorzugten Ausgestaltung der Erfindung ist vorgesehen, dass das Vegetationselement aus einer maschen- oder gitterförmigen Hülle mit einer darin angeordneten Träger- oder Füllschicht ausgebildet ist, wobei die Hülle und die Füllschicht aus verrottbarem Material ausgebildet sind. Diese Ausgestaltung weist den Vorteil auf, dass in dem Maße, wie die Wurzelbildung zunimmt, die Dicke des Vegetationselementes durch Verrottung abnimmt, so dass ein Nachsacken der Befüllung nicht mehr möglich ist und die Gabione quasi vollständig befüllt bleibt.

Des Weiteren ist bevorzugt vorgesehen, dass das Vegetationselement aus Kokosfasern ausgebildet ist. Dadurch kann das Verrotten von Hülle und Füllschicht gleichmäßig und erst nach einer längeren Zeitdauer erfolgen, die im umgekehrten Maße der Zunahme des Wurzelwachstums entspricht. Darüber hinaus weist dieses Material den Vorteil auf, dass nach dem Befüllen eine lockere und luftige Struktur bei gleichzeitig hinreichender Festigkeit verbleibt.

Des Weiteren ist bevorzugt vorgesehen, dass das Vegetationselement vor dem Einbringen des Füllmaterials mit Befestigungsmitteln an der Innenseite des Käfigs vorfixiert wird. Beispielsweise können Befestigungsschnüre aus verrottbarem Material oder Kabelbinder oder dergleichen eingesetzt werden, um eine Vorfixierung des Vegetationselementes, insbesondere über deren gitter- oder maschenförmige Hülle zum gitterdrahtförmigen Käfig, zu ermöglichen. Diese Vorfixierung soll lediglich dazu dienen, das Vegetationselement zum Käfig solange zu positionieren, bis anschließend das Füllmaterial eingebracht ist. Bei beispielsweise mehreren in einer Reihe übereinander liegenden Vegetationselementen wird die Befüllung des Käfigs dergestalt sein, dass das unterste Vegetationselement zum Käfig befestigt wird und anschließend ein Befüllvorgang mit Füllmaterial bis zur Höhe des untersten Vegetationselementes erfolgt. Im Anschluss daran wird darüber liegend ein weiteres Vegetationselement befestigt und der nachfolgende Füllvorgang wiederum bis zur Höhe des weiteren Vegetationselementes vorgenommen. Durch diese schrittweise Anordnung kann auch eine gute Füllung ohne Nachsacken erzielt werden.

Bevorzugt werden bei dem Einbringen von mehreren Vegetationselementen nebeneinander oder übereinander diese bündig aneinander liegend zur Innenseite des Käfigs vorfixiert. Dadurch wird eine gleichmäßige und durchgehende Aufbaudicke durch die Vegetationselemente erzielt, so dass für das nachfolgende Wurzelwachstum entlang der Innenseite eine gleichmäßige Aufbaudicke und somit eine gleichmäßige Tiefe eines Raumes für das Wurzelwachstum vorgesehen ist.

Zwischen dem zumindest einen Vegetationselement und dem Füllmaterial ist bevorzugt zumindest eine Sperrschicht vorgesehen. Diese Sperrschicht kann beispielsweise zur Stützung der Statik dienen. Des Weiteren kann diese Sperrschicht eine räumliche Trennung zwischen dem Füllmaterial und dem Vegetationselement bilden. Darüber hinaus kann dadurch erzielt werden, dass eine gleichmäßige Flächenpressung auf das beziehungsweise die Vegetationselemente durch das Füllmaterial erfolgt und das Füllmaterial durch den zur Sichtseite weisenden Wandabschnitt nicht nach außen dringt, sofern dessen Körnung kleiner als die Maschenweite des Käfig ist. Die Sperrschicht ist bevorzugt parallel zu der sichtbaren Wandseite des Käfigs eingebaut, um insbesondere das zumindest eine Vegetationselement gleichmäßig mit Druck nach dem Befüllen mit dem Füllmaterial zu beaufschlagen.

Bevorzugt ist die Sperrschicht als gitter- oder drahtförmiges Gewebe, insbesondere als Armierungsgewebe, ausgebildet. Dadurch wird ermöglicht, dass auch Wurzeln des Pflanzenmaterials in das Gewebe einwachsen oder diese durchdringen können. Gleichzeitig wird dadurch eine für die Feuchtigkeit durchlässige Sperrschicht erzielt.

Zur Pflege der begrünten Gabione ist bevorzugt vorgesehen, dass dem zumindest einen Vegetationselement zumindest eine Bewässerungsstelle zugeordnet ist. Dadurch kann über eine Bewässerungsanlage in regelmäßigen Abständen Wasser und/oder Düngemittel bzw. Nährstoffe dem Pflanzenmaterial zugeführt werden, wobei die Bewässerungsstellen innerhalb des Käfigs vorgesehen sind, um Manipulationen zu erschweren. Die zumindest eine Bewässerungsstelle ist bevorzugt an einer oberen Stirnseite des Vegetationselementes oder benachbart zu einer oberen Stirnseite des Vegetationselementes vorzugsweise an dem Käfig befestigt. Hierfür können beispielsweise Bewässerungsschläuche vorgesehen sein, welche nach der Bewässerungsstelle parallel zur Sperrschicht zur jeweiligen Anschlussstelle geführt werden können. Des Weiteren können Bewässerungsschläuche mit Vlies oder in Vliesmatten vorgesehen sein. Diese weisen eine erhöhte Wasserspeicherschicht auf und können somit eine hinreichende Versorgung des Pflanzenmaterials sicherstellen. Durch die Vliesmatten können die Stirnseiten und/oder Rückseiten des Vegetationselementes abgedeckt sein. Alternativ kann auch vorgesehen sein, dass die Bewässerungsstellen auf der Rückseite des Vegetationselementes vorgesehen sind und aufgrund deren Sprühwirkung die Flüssigkeit zumindest teilweise in das Vegetationselement eindringen. Des Weiteren kann auch eine Kombination von zumindest einer oberhalb des Vegetationselementes und an einer Rückseite des Vegetationselementes vorgesehenen Bewässerungsstelle gegeben sein. Insbesondere weisen die Bewässerungsstellen Verbindungsstellen oder Anschlussstellen auf, damit ein durchgängiges Bewässerungssystem beim Setzen der einzelnen Gabionen oder beim Aufbau einer sehr großen Gabionenwand ermöglicht ist.

Als Füllmaterial ist bevorzugt mineralisches Material vorgesehen. Hierbei kann es sich um Steine, Bruchsteine oder sonstige mineralische Materialien handeln. Da bei einer begrünten Gabione die Optik der Steine nicht in Erscheinung tritt, kann auch Abfallmaterial beziehungsweise kleinkörniges mineralisches Material eingesetzt werden. Alternativ kann auch ein Substrat vorgesehen sein.

Nach einer weiteren bevorzugten Ausgestaltung der Gabione ist vorgesehen, dass solche Gabionen als Lärmschutzwand oder Böschungsbegrünung eingesetzt werden. Bevorzugt sind hierfür einzeln transportierbare Gabionen mit Vegetationselementen vorgesehen. Durch die Ausgestaltung einer begrünten Lärmschutzwand kann des Weiteren eine erhebliche Feinstaubreduzierung erzielt werden. Dadurch kann eine solche begrünte Gabionenwand eine Doppelfunktion aufweisen. Darüber hinaus ist insbesondere in sehr stark besiedelten Gebieten eine grüne Lärmschutzwand optisch ansprechend.

Die der Erfindung zugrunde liegende Aufgabe wird des Weiteren durch ein Wandelement zur begrünten Gestaltung von Außenanlagen gelöst, welches aus einem gitterförmigen Käfig, zumindest einem Vegetationselement mit daraus zumindest teilweise herausgewachsenem Pflanzenmaterial und Füllmaterial besteht und vor Ort zusammensetzbar ist. Solche Wandelemente, die aus drei Einheiten bestehen, weisen den Vorteil auf, dass diese bedarfsmäßig vor Ort aufgebaut werden können, so dass der Transport vor Ort vereinfacht ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer begrünten Gabione,
- Figur 2: eine schematische Schnittdarstellung eines Vegetationselementes mit Pflanzenmaterial,
- Figur 3: eine schematische Seitenansicht eines Vegetationselementes, welches der Seitenwand des Käfigs zugeordnet ist und
- Figur 4: eine schematische Seitenansicht einer begrünten Gabionenwand als Lärmschutzwand.

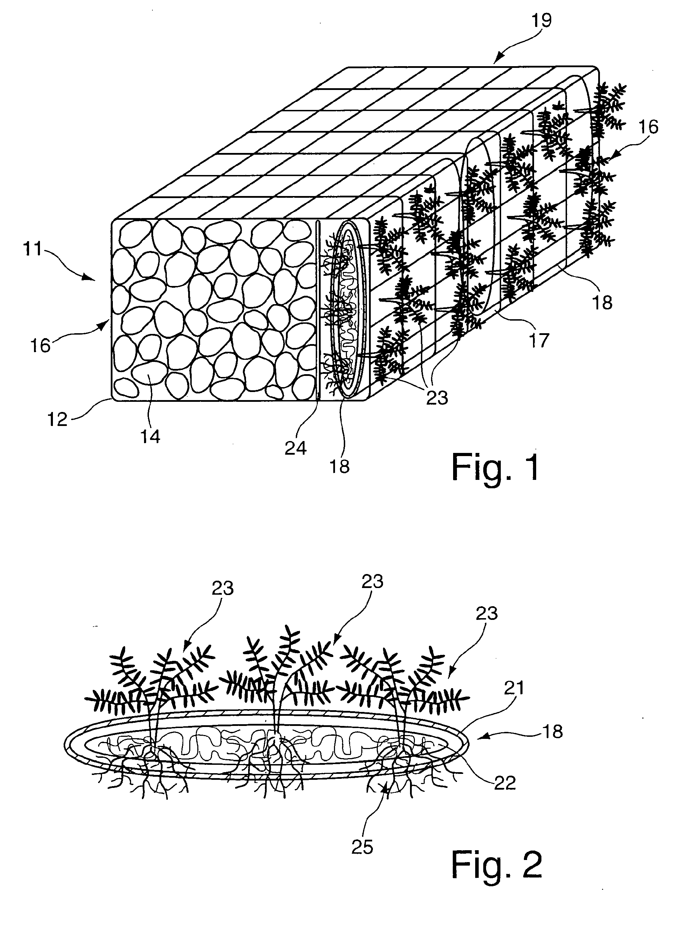

In Figur 1 ist perspektivisch eine erfindungsgemäße Gabione 11 als begrünte Gabione dargestellt. Diese Gabione 11 umfasst einen gitterförmigen Käfig 12, der aus einem nicht näher dargestellten Boden, vier Seitenwänden 16 und einem Deckel 19 besteht, die zu einem Käfig 12 geformt sind. In dem Käfig 12 ist ein Füllmaterial 14 vorgesehen, welches aus einem mineralischen Material besteht.

An einer Innenseite eines Wandabschnittes 17 der Seitenwand 16 ist ein Vegetationselement 18 vorgesehen. Dieses Vegetationselement 18 ist beispielsweise in Figur 2 dargestellt und besteht aus einer maschen-oder gitterförmigen Hülle 21 und einer darin angeordneten Trägerschicht oder Füllschicht 22, wobei die Hülle 21 und Füllschicht 22 bevorzugt aus verrottbarem Material ausgebildet sind. Insbesondere sind die Hülle 21 und die Trägerschicht 22 aus demselben Material, wie beispielsweise Kokosfasern, hergestellt. Die Trägerschicht 22 besteht bevorzugt aus wirr zueinander angeordneten Einzelfasern. In dem bevorzugt kissen-oder mattenförmig ausgebildeten Vegetationselement 18 ist ein Pflanzenmaterial 23 vorgesehen, welches zumindest teilweise aus der Hülle 21 herausgewachsen ist. In der Trägerschicht 22 oder der Füllung bilden sich Wurzeln 25 aus, so dass das Pflanzenmaterial 23 in dem Vegetationselement 18 verankert ist. Bevorzugt werden Vegetationselemente 18 eingesetzt, bei denen die Wurzeln 25 zumindest teilweise aus der Trägerschicht 22 herausragen beziehungsweise ein Wurzelballen auf der Unterseite des Vegetationselementes 18 sich zumindest sichtbar ausgebildet hat. Ein solches Vegetationselement 18 ist aus der EP 1 634 493 A1 bekannt, auf welche inhaltlich Bezug genommen wird.

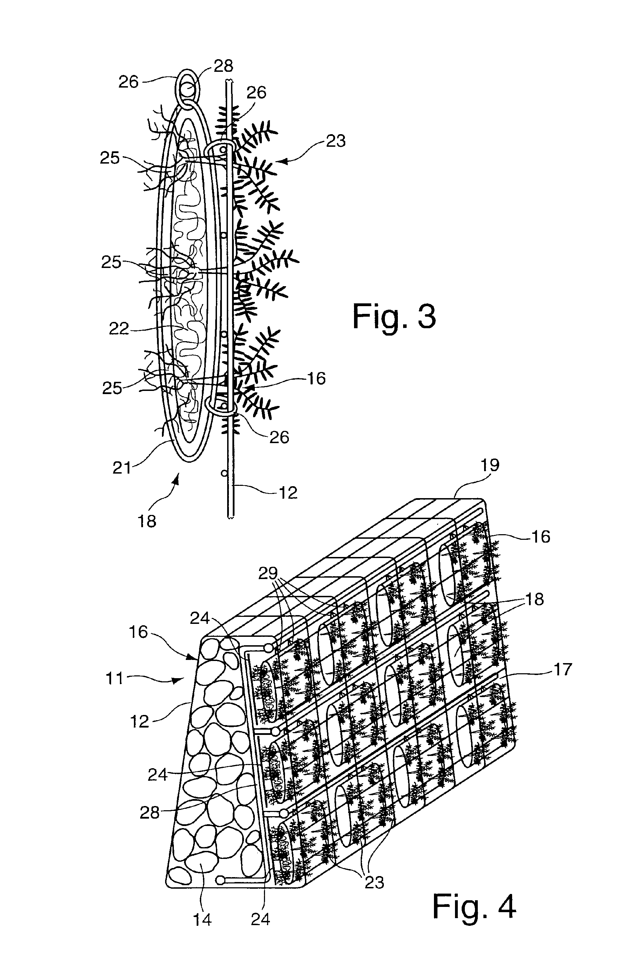

Dieses Vegetationselement 18 wird senkrecht stehend an eine Innenseite des Wandabschnittes 17 der Seitenwand 16 angeordnet und durch Befestigungsmittel 26 vorfixiert, wie beispielsweise in Figur 3 dargestellt ist. Das Pflanzenmaterial 23 erstreckt sich durch die gitterförmige Seitenwand 16 hindurch zur Außenseite der Gabione 11. Als Befestigungsmittel 26 können beispielsweise Befestigungsbänder aus Kokosfasern, Kabelbindern oder dergleichen eingesetzt werden. Alternativ können Klammerelemente oder Hakenelemente vorgesehen sein, welche beispielsweise C-förmig ausgebildet sind. Dadurch kann das eine Hakenelement einerseits an einer Masche des Wandabschnittes 17 eingehängt werden und das andere Hakenelement andererseits an der Hülle 21 des Vegetationselementes 18 angreifen. Alternativ kann vorgesehen sein, dass an der Hülle 21 des Vegetationselementes 18 Haken- oder Greifelemente angeordnet sind, welche nach dem Positionieren des Vegetationselementes 18 zur Innenseite des Wandabschnittes 17 der Seitenwände 16 oder des Deckels 19 angreifen können.

Die Außenmaße des Vegetationselementes 18 sind bevorzugt an das Rastermaß von Käfigen 12 der Gabione 11 angepasst. Dadurch wird ermöglicht, dass beispielsweise ein oder mehrere neben- oder übereinander angeordnete Vegetationselemente 18 eine Seitenwand 16 vollständig einnehmen.

Bei dem Ausführungsbeispiel gemäß Figur 1 sind beispielsweise zwei quadratische Vegetationselemente 18 nebeneinander angeordnet und füllen die Fläche einer Seitenwand 16 vollständig aus. Dabei sind die Vegetationselemente 18 bündig aneinander liegend angeordnet. Dadurch wird ermöglicht, dass die Vegetationselemente 18 einen bündigen Übergang zueinander schaffen, so dass eine gleichmäßige Begrünung gegeben ist. Zusätzlich können ein quasi konstanter Bauraum für das Wurzelwachstum gebildet werden.

Zwischen dem Füllmaterial 14 und dem oder den Vegetationselementen 18 ist bevorzugt eine Sperrschicht 24 vorgesehen. Diese Sperrschicht 24 ist bevorzugt als gitter- oder maschenförmiges Gewebe, insbesondere als Armierungsgewebe, ausgebildet. Dieses dient zum einen dazu, das Füllmaterial 14 gegenüber dem oder den Vegetationselementen 18 zu trennen und kann zum anderen zur Aussteifung oder Verbesserung der Statik dienen.

Die in Figur 1 dargestellte Gabione 11 kann werkseitig gefüllt werden, wobei das Vegetationselement 18 an einer oder mehreren Seitenwänden als auch an dem Deckel oder wahlweise vorgesehen ist. In Abhängigkeit der Position der Gabione 11 zur Bildung von Wällen, Lärmschutzanlagen, Stützwänden, Sichtschutzmauern als auch Mauern zum Abfangen von Hängen werden die Seitenwände 16 und Deckel 19 mit Vegetationselementen 18 versehen.

In Figur 4 ist beispielsweise eine Gabione 11 dargestellt, die als Wandelement für eine Lärmschutzwand ausgebildet ist. Diese im Querschnitt trapezförmig ausgebildete Gabione 11 weist mehrere nebeneinander als auch übereinander angeordnete Vegetationselemente 18 auf, die an einer oder beiden Seitenflächen und/oder Stirnseiten und/oder am Deckel vorgesehen sein können. Die Anordnung und Einbringung ist analog zur Gabione 11 gemäß Figur 1.

Zur Bewässerung der Vegetationselemente 18 ist eine Bewässerungseinrichtung vorgesehen, die aus mehreren Schläuchen 28 und zumindest einem Versorgungsanschluss besteht, wobei jeweils ein Bewässerungsschlauch 28 mit einer oder mehreren Bewässerungsstellen 29 bevorzugt oberhalb einer oberen Stirnseite des Vegetationselementes 18 angeordnet ist. Alternativ kann ein solcher Bewässerungsschlauch 28 an einer Innenseite des Wandabschnittes 17 befestigt sein oder ein Besprühen der Vegetationselemente 18 von deren Rückseiten ermöglichen. Sobald die Begrünung eine hinreichende Flächendeckung eingenommen hat, sind die an dem Käfig 12 befestigten Bewässerungsschläuche 28 nicht mehr sichtbar.

Bevorzugt wird eine solche Lärmschutzwand dahingehend aufgebaut, dass zunächst die Bewässerungseinrichtung in dem Käfig 12 vorfixiert wird. Dabei werden die Bewässerungsschläuche 28 an den Stellen der Wandabschnitte 17 der Seitenwände 16 und/oder des Deckels 19 vorfixiert, welche dem oder den Vegetationselementen 18 zugeordnet werden. Im Anschluss daran wird eine unterste Reihe von Vegetationselementen 18 eingebracht. Anschließend wird die Sperrschicht 24 eingestellt, um nachfolgend die Befüllung mit Füllmaterial 22 vorzunehmen und die Bewässerungsstelle 29 zum Vegetationselement 18 zu positionieren. Nachdem das Füllmaterial im Wesentlichen bis auf eine Höhe des ersten Vegetationselementes 18 oder der ersten Reihe der Vegetationselemente 18 aufgefüllt ist, wird der Bewässerungsschlauch 28 für die zweite Reihe des oder der Vegetationselemente 18 in seine endgültige Position gebracht, das oder die Vegetationselemente 18 befestigt und die Sperrschicht 24 angeordnet, um nachfolgend wieder Füllmaterial 14 einzubringen. Dieser Vorgang kann sich in Abhängigkeit der Anzahl der Vegetationselemente 18 übereinander liegend wiederholen. Alternativ kann das Bewässerungssystem auch entsprechend der Anordnung des oder der Vegetationselemente nacheinander durchgeführt werden, so dass jede Ebene nach und nach mit Bewässerungsschläuchen bestückt wird. Unabhängig der Bewässerungsanordnung kann gleichzeitig mit den Vegetationselementen 18 auch eine entsprechende Zuordnung und Fixierung der Bewässerungsschläuche 28 und deren Bewässerungsstellen 29 zu den Vegetationselementen erfolgen.

Solche begrünte Gabionen 11 als Lärmschutzwände weisen des Weiteren den Vorteil auf, dass dadurch eine Feinstaubreduzierung ermöglicht ist. Darüber hinaus kann eine Klimaverbesserung gegenüber unbegrünten Lärmschutzwänden erzielt werden.

## Patentansprüche

1. Gabione bestehend aus einem gitter- oder drahtförmigen Käfig (12) und aus einem in dem Käfig (12) aufgenommenen Füllmaterial (14), **dadurch gekennzeichnet, dass** an zumindest einer Innenseite eines Wandabschnittes (1) des Käfigs (12) zumindest ein Vegetationselement (18) vorgesehen ist, welches zumindest teilweise aus dem Vegetationselement (18) herausragendes Pflanzenmaterial umfasst und dass das in dem Vegetationselement (18) versehene Pflanzenmaterial zur sichtbaren Außenseite eines Wandabschnittes (17) des Käfigs (12) weist.

2. Gabione nach Anspruch 1, **dadurch gekennzeichnet, dass** das Vegetationselement (18) aus einer maschen- oder gitterförmigen Hülle (21) mit einer darin angeordneten Träger- oder Füllschicht (22) ausgebildet ist, wobei die Hülle (21) und die Träger- oder Füllschicht (22) aus verrottbarem Material ausgebildet sind.

3. Gabione nach Anspruch 1 oder 2, **dadurch gekennzeichnet, dass** das Vegetationselement (18) aus Kokosfasern ausgebildet ist.

4. Gabione nach einem der vorhergehenden Ansprüche, **dadurch gekennzeichnet, dass** das Vegetationselement (18) vor dem Einbringen des Füllmaterials (14) mit Befestigungsmitteln (26) an der Innenseite des Käfigs (12) vorfixiert ist.

5. Gabione nach einem der vorhergehenden Ansprüche, **dadurch gekennzeichnet, dass** mehrere nebeneinander oder übereinander angeordnete Vegetationselemente (18) bündig aneinander anliegend zur Innenseite des Käfigs (12) vorfixiert sind.

6. Gabione nach einem der vorhergehenden Ansprüche, **dadurch gekennzeichnet, dass** zwischen dem zumindest einen Vegetationselement (18) und dem Füllmaterial (14) zumindest eine Sperrschicht (24) vorgesehen ist.

7. Vegetationselement nach Anspruch 6, **dadurch gekennzeichnet, dass** die Sperrschicht (24) als gitter- oder maschenförmiges Gewebe, insbesondere Armierungsgewebe, ausgebildet ist und vorzugsweise parallel zu dem sichtbaren Wandabschnitt (17) des Käfigs (12) angeordnet ist.

8. Gabione nach einem der vorhergehenden Ansprüche, **dadurch gekennzeichnet, dass** dem zumindest einen Vegetationselement (18) zumindest eine Bewässerungsstelle zugeordnet ist, die vorzugsweise entlang einer oberen Stirnseite des Vegetationselementes (18) verläuft oder im Bereich einer oberen Stirnseite des Vegetationselementes (18) am Käfig (12) befestigt ist.

9. Gabione nach einem der vorhergehenden Ansprüche, **dadurch gekennzeichnet, dass** das Füllmaterial (14) aus mineralischem Material oder aus einem Substrat besteht.

10. Gabione nach einem der vorhergehenden Ansprüche, **dadurch gekennzeichnet, dass** der Käfig (12) als zumindest ein Wandelement, insbesondere transportierbares Einzelwandelement, ausgebildet und zur Verwendung als Lärmschutzwand und/oder zur Feinstaubreduzierung einsetzbar ist.

11. Wandelement zur begrünten Gestaltung von Außenanlagen, **dadurch gekennzeichnet, dass** dieses aus einem gitter- oder drahtförmigen Käfig (12), aus zumindest einem Vegetationselement (18) mit daraus zumindest teilweise herausgewachsenem Pflanzenmaterial und aus Füllmaterial (14) besteht und vor Ort befüllbar ist.
